# EUROPÄISCHE PATENTSCHRIFT

(11) **EP 0 433 287 B1**
(45) Veröffentlichungstag und Bekanntmachung des Hinweises auf die Patenterteilung: **04.08.1993**
(21) Anmeldenummer: 89905634.5
(22) Anmeldetag: 24.05.1989
(51) Int. Cl.: G01C 21/22

(54) **PLANGESTÜTZTES ORTUNGS- UND NAVIGATIONSSYSTEM**
MAP-ASSISTED LOCATING AND NAVIGATING SYSTEM
SYSTEME DE REPERAGE ET DE NAVIGATION ASSISTE PAR PLAN GEOGRAPHIQUE

(30) Priorität: 10.09.1988 DE 3830901
(43) Veröffentlichungstag der Anmeldung: 26.06.1991
(73) Patentinhaber: ROBERT BOSCH GMBH, 70442 Stuttgart (DE)
(72) Erfinder: KÖNIG, Winfried, D-7507 Pfinztal-Berghausen (DE); HEINTZ, Fieder, D-7505 Eltingen 6 (DE)
(86) Internationale Anmeldenummer: DE8900325
(87) Internationale Veröffentlichungsnummer: WO9002922

(56) Entgegenhaltungen:
- EP-A- 0 130 289
- EP-A- 0 196 498
- DE-A- 3 517 213
- GB-A- 2 192 058
- PATENT ABSTRACTS OF JAPAN, vol. 9, Nr. 109 (P-355)(1832), 14 May 1985 ; & JP-A-59231411

## Beschreibung

### Stand der Technik

Die Erfindung geht aus von einem plangestützten Ortungs- und/oder Navigationsverfahren für Landfahrzeuge nach der Gattung des Hauptanspruchs. Aus der GB-A-21 92 058 ist bereits ein Navigationssystem bekannt, bei dem der Benutzer zunächst eine Startposition in das Navigationssystem eingibt und zu einem späteren Zeitpunkt durch Drücken einer Starttaste startet. Die Eingabe der Startposition wird dem Benutzer dadurch erleichert, daß er nur einen Namen einzugeben braucht oder vom Navigationssystem einen Vorschlag für die Startposition bekommt die er dann bestätigen kann. Weiterhin ist schon aus der DE-A-35 12 127 ein Navigationssystem für Landfahrzeuge bekannt, das eine plangestützte Ortungseinrichtung und eine Routensuchvorrichtung aufweist. Beispielsweise wird dem Fahrer ein auf einer Compact-Disc gespeicherter Straßenplan auf einem Monitor angezeigt. Der Fahrer gibt seine Startposition und seine Zielposition über eine Eingabe in das Navigationssystem ein, aus der eine Routensuchvorrichtung den optimalen Weg zum Zielpunkt auswählt und auf dem Monitor anzeigt. Die einzelnen Straßen und Kreuzungen sind in dem Navigationssystem als Streckensegmente oder Kreuzungspunkte abgespeichert. Zum Aufsetzen des Navigationssystems ist es daher erforderlich, daß der Fahrer einen Punkt eingibt, der im Navigationssystem beispielsweise als Straßenkreuzung abgespeichert ist. Da in einem Straßenplan beispielsweise Kreuzungspunkte besonders geeignete Markierungspunkte sind, ist es besonders vorteilhaft, solche markante Punkte als Aufsetzpunkte für die Startposition anzugeben. Dann ist es jedoch erforderlich, daß der Fahrer im Bereich einer Kreuzung oder an einem unvorteilhaften Punkt anhalten müßte, um seine genaue Fahrzeugposition in das Navigationssystem eingeben zu können. Aus verkehrstechnischen Gründen ist dieses nicht immer möglich. Wählt der Fahrer dagegen für seine Positionseingabe eine Position vor der Kreuzung oder hinter der Kreuzung, dann rechnet das Navigationssystem mit einem Ortungsfehler, der zu fehlerhaften Anweisungen des Routensuchsystems führt.

### Vorteile der Erfindung

Das erfindungsgemäße Ortungs- und/oder Navigationsverfahren für Landfahrzeuge mit den Merkmalen des Anspruchs hat demgegenüber den Vorteil, daß die Position des Landfahrzeuges am Aufsetzpunkt beispielsweise beim Durchfahren einer Kreuzung durch eine Markierungsvorrichtung markiert wird und der Fahrer zu einem späteren Zeitpunkt, wenn er aus dem Gefahrenbereich der Kreuzung oder des fließenden Verkehrs herausgefahren ist, anhalten und die markierte Position definieren kann. Dadurch kann auf einfache Weise ein Ortungsfehler vermieden werden. Dies ist besonders auch dann günstig, wenn das Landfahrzeug von einem nicht plangestützten Gebiet in ein plangestütztes Gebiet einfährt und das Navigationssystem eine neue Startposition erhalten muß. Häufig ist das der Fall, wenn das Fahrzeug nicht auf der Straße sondern beispielsweise auf Fährschiffen oder Reisezügen transportiert wird. Beim Einfahren in das plangestützte Gebiet markiert der Fahrer diese Position während der Fahrt und kann dann später, beispielsweise auf einem Parkplatz, die genaue Positionseingabe durchführen.

Besonders vorteilhaft ist auch, daß die augenblickliche Position des Landfahrzeuges aufgrund der nach der Markierung zurückgelegten Wegstrecke und Richtungsänderungen berechnet wird. Dadurch kann zu jedem Zeitpunkt die günstigste Fahrtroute des Landfahrzeuges vom Ortungs- und/oder Navigationssystem ermittelt werden.

Besonders vorteilhaft ist auch, daß die Markierung der Position auf einfache Weise durch einen Taster erfolgt. Durch die Betätigung des Tasters wird die Aufmerksamkeit des Fahrers kaum vom Verkehrsgeschehen abgelenkt. Ein kurzer Tastendruck genügt zum Markieren der momentanen Position des Landfahrzeuges.

### Zeichnung

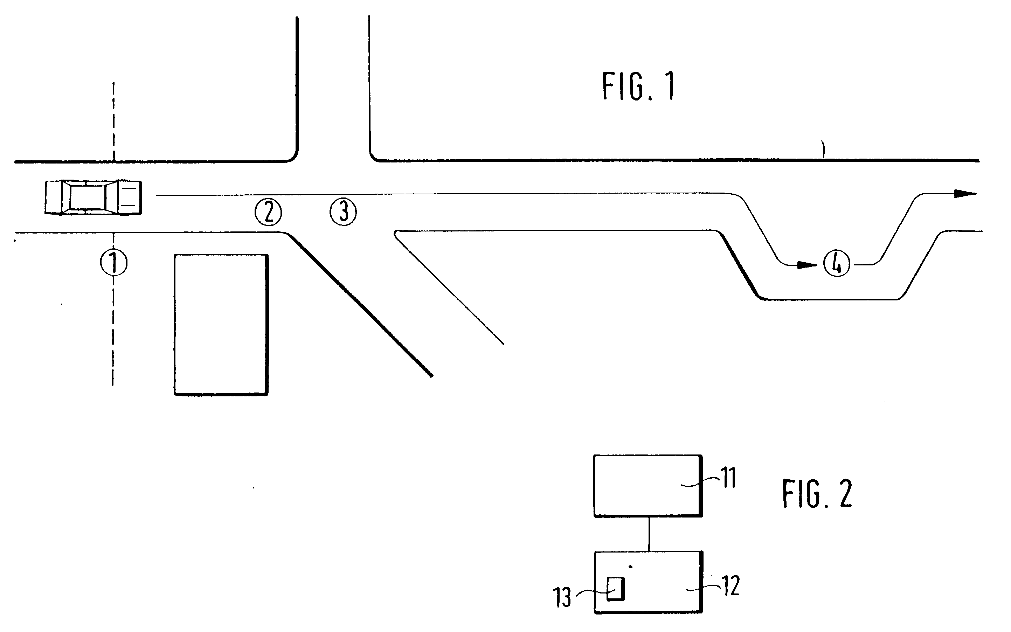

Ein Ausführungsbeispiel der Erfindung ist in der Zeichnung dargestellt und in der nachfolgenden Beschreibung näher erläutert. Es zeigen Figur 1 einen Teil eines Straßenplans und Figur 2 ein Blockschaltbild des dem beanspruchten Verfahren zugrundeliegenden Ortungs- und/oder Navigationssystems.

### Beschreibung des Ausführungsbeispiels

In Figur 1 ist ein Teil eines Straßenplanes dargestellt, auf dem ein Landfahrzeug Kfz von einem nicht plangestützen Gebiet in ein plangestütztes Gebiet einfährt. Das plangestütztes Gebiet weist als markante Position eine Straßenkreuzung auf und im weiteren Verlauf der Straße eine Parkbucht. In dem Ausführungsbeispiel sind hier verschiedene Markierungspunkte 1 bis 4 angebracht, die im folgenden näher erläutert werden. Die zu befahrenden Straßen haben für sich keine Markierungen, die vom Ortungs und/oder Navigationssystem 11 erkannt werden. Das Ortungs- und/oder Navigationssystems 11 orientiert sich im wesentlichen auf die Kreuzungen, die beispielsweise durch ihre Namen hinreichend definiert sind. Durch die maßstabsgetreue Abspeicherung des Straßenplanes ist durch kontinuierliche Messung der zurückgelegten Wegstrecke und der Richtungsänderungen des Landfahrzeuges die Ortung zu jedem Zeitpunkt möglich. An der Trennlinie 1 fährt in diesem Beispiel das Landfahrzeug Kfz in das rechts liegende plangestützte Gebiet ein. Die Trennlinie 1 ist natürlich auf der Straße nicht markiert, so daß der Fahrer hier seine Position nicht eingeben kann. Die nächste sinnvolle Positionseingabe wird die Kreuzung sein, die durch die Markierung 3 gekennzeichnet ist. Für das Ortungs- und/oder Navigationssystem 11 ist es am günstigsten, wenn die Kreuzungsmitte markiert wird. Beim Überfahren der Kreuzungsmitte wird der Fahrer durch Druck auf einen Taster 13 diese Position dem Ortungs- und/oder Navigationssystem 11 übermitteln. Da er auf der Kreuzungsmitte in der bestimmten Position 3 nicht anhalten kann, um beispielsweise die Namen dieser Kreuzung einzugeben, wird er seine Fahrt fortsetzen, bis er eine Gelegenheit zum Anhalten findet. Diese Gelegenheit ergibt sich in der späteren Position 4. Hier wird er sein Fahrzeug anhalten und die Daten der bestimmten Position 3 eingeben. Aus der zurückgelegten Strecke und den Winkeländerungen, die das Landfahrzeug zwischen der Position 3 und 4 zurückgelegt hat, wird das Ortungs- und/oder Navigationssystem 11 die Koppeldaten für die bestimmte Position 3 exakt ermitteln. Anhand der eingegebenen Straßennamen für die bestimmte Position 3 kann nun das Ortungs- und/oder Navigationssystem 11 die gespeicherten Daten für diese Kreuzung aus den gespeicherten Daten der Compact-Disc heraussuchen. Damit ist die Position zum Aufsetzen des Ortungs- und/oder Navigationssystems 11 exakt festgelegt. Das Routensuchsystem kann nun aus den vorhandenen Daten die günstigste Wegstrecke zum vorgegebenen Ziel heraussuchen und dem Fahrer auf dem Monitor anzeigen.

Würde der Fahrer beispielsweise vor der Kreuzung an der Position 2 anhalten und diesen Punkt, der nicht als markanter Koppelpunkt im System gespeichert ist, als bestimmte Position 3 angeben, dann würde das Ortungs- und/oder Navigationssystem 11 einen Ortungsfehler machen. Im Verlauf der weiteren Wegstrecke würde dieser Ortungsfehler mitgeschleppt werden und zu weiteren Fehlern führen. Das könnte dann dazu führen, daß falsche Wegleitinformationen vom Ortungs- und/oder Navigationssystem 11 ausgegeben würden. Die Markierung der bestimmten Position 3 durch die Markierungseinrichtung 13 und die spätere Definition dieser Position bewirken, daß der Ortungsfehler minimiert wird.

In Figur 2 ist ein Blockschaltbild des Ortungs- und Navigationssystems 11 dargestellt, das mit einer Dateneingabe 12 verbunden ist. An einer für den Fahrer gut erreichbaren Stelle ist hier eine Markierungsvorrichtung 13 angebracht, die beispielsweise als Taster oder Merktaste ausgebildet ist. Bei Betätigung der Markierungseinrichtung 13 wird das Ortungs- und Navigationssystem 11 initalisiert und in Betrieb gesetzt. Es ermittelt nun fortlaufend aus der zurückgelegten Wegstrecke und den Richtungsänderungen des Landfahrzeuges Kfz seine Fahrtroute. Durch die Dateneingabe in der späteren Position 4 des Landfahrzeuges Kfz wird das Ortungs- und/oder Navigationssystem auf die bestimmte Position 3 des gespeicherten Straßenplanes aufgesetzt. Die bereits bis zur späteren Position 4 zurückgelegte Fahrtroute des Landfahrzeuges Kfz wird vom Aufsetzpunkt an kontinuierlich mitgekoppelt, so daß der Fahrer zu jeder Zeit seine augenblickliche Position auf dem gespeicherten Straßenplan erkennen kann. Das Ortungs- und/oder Navigationssystem 11 kann dann schneller die weiteren Wegleitinformationen zur Verfügung stellen. Außerdem braucht der Fahrer seine Aufmerksamkeit nicht mehr dem Ortungs- und/oder Navigationssystem 11 zuzuwenden. Er kann seine Fahrt ungehindert fortsetzen.

## Patentansprüche

1. Straßenplangestütztes Ortungs-oder Navigationsverfahren für ein Landfahrzeug, bei dem ein Ortungs- oder Navigationssystem (11) mit einer Dateneingabe (12) für die Eingabe von Positionsdaten und mit einer vorzugsweise als Taster ausgebildeten Markierungsvorrichtung (13) gestartet wird und wobei durch das System (11) die zurückgelegte Wegstrecke und Richtungsänderung des Fahrzeugs seit dem Start des Systems (11) ermittelt und gespeichert wird, dadurch gekennzeichnet, daß die Daten der ersten Position (3) des Fahrzeugs beim Betätigen der Markierungsvorrichtung (13) nachträglich an einer späteren, zweiten Position (4), die räumlich nach der ersten Position liegt, als Startpositionsdaten eingegeben werden, und daß nach der Eingabe der Startpositionsdaten das System (11) auf die im gespeicherten Straßenplan bestimmte erste Position (3) aufgesetzt wird, und zur Positionsbestimmung der zweiten Position (4) des Fahrzeugs für das Ortungs- oder Navigationsverfahren seine zurückgelegte Fahrtroute auf den gespeicherten Straßenplan mitgekoppelt wird.

## Claims

1. Roadmap-aided positioning or navigation method for a land vehicle, in which a positioning or navigation system (11) having a data input (12) for entering position data and having a marking device (13), which is preferably constructed as a push button, is started, the route travelled and any direction change of the vehicle since the system (11) was started being determined and stored by the system (11), characterised in that the data for the first vehicle position (3) are entered when the marking device (13) is operated, the data for a later, second position (4), which is physically located after the first position, are entered subsequently, as start position data, and in that, after entering the start position data, the system (11) is set up at the first position (3), which is defined in the stored roadmap and, in order to define the location of the second vehicle position (4) for the positioning or navigation method, the route travelled by said vehicle is coupled to the stored roadmap.

## Revendications

1. Procédé de repérage ou de navigation assisté par une carte routière pour un véhicule, dans lequel un système de repérage ou de navigation (11) avec une entrée de données (12) pour l'entrée des données de la position par un avantageux dispositif de marquage (13) sous la forme d'un clavier à touches et où le trajet parcouru et les changements de direction du véhicule sont communiqués et mémorisés depuis la mise en route du système (11), procédé caractérisé en ce que on entre les données de la première position (3) du véhicule en tant que position de départ en actionnant le dispositif de marquage (13) par la suite dans une seconde position ultérieure (4) qui se trouve localisée après la première position et en ce qu'après avoir entré les données de la position de départ on positionne le système (11) sur la première position (3) déterminée dans la carte routière mémorisée et pour déterminer la seconde position (4) du véhicule, on pointe la distance à parcourir sur la carte routière mémorisée pour le procédé de repérage et de navigation.
